Europäisches Patentamt

European Patent Office

Office européen des brevets

(19)

(11) Publication number: **0 370 634**
**A2**

# EUROPEAN PATENT APPLICATION

(12)

(21) Application number: **89311116.1**

(22) Date of filing: **27.10.89**

(51) Int. Cl.⁵: **H01M 2/34**

(30) Priority: **27.10.88 US 263303**

(43) Date of publication of application:
**30.05.90 Bulletin 90/22**

(84) Designated Contracting States:
**CH FR GB LI**

(71) Applicant: **EVEREADY BATTERY COMPANY, INC.**
**Checkerboard Square**
**St. Louis Missouri 63164(US)**

(72) Inventor: **Huhndorff, Harry Roland**
**322 Plymouth Drive**
**Bay Village, Ohio 44140(US)**

(74) Representative: **Lord, Hilton David et al**
**Marks & Clerk 57-60 Lincoln's Inn Fields**
**London WC2A 3LS(GB)**

(54) Cell circuit interrupter.

(57) The present invention relates to galvanic cells having a failsafe circuit interrupter dependent on bulging of the closed end of the container on internal pressure build-up, the closed end of the container being modified, or weakened, so that, on pressure build-up, the closed end of the container bulges to a greater degree than an unmodified container, allowing greater accuracy of construction of the circuit interrupter.

EP 0 370 634 A2

# CELL CIRCUIT INTERRUPTER

The present invention relates to a galvanic cell having a failsafe circuit interruption means for electrically isolating one terminal of the cell from the cell's electrochemical system, the closed end of the container being adapted to bulge beyond a predetermined amount when subject to an internal pressure build-up.

Galvanic cells, such as alkaline cells, are generally designed to vent when the internal pressure exceeds a predetermined amount. When exposed to an abuse condition, such as being charged to an excessive degree, the cell is designed to vent and allow gas to escape. Under certain abuse conditions, electrolyte entrained in the gas may be forced from the cell. It is preferable to have the elecrolyte escape rather than have the cell rupture from internal pressure build-up.

Cell manufacturers have used a number of approaches to resolve the problem of expelling electrolyte during venting. One method of preventing seal rupture due to abuse charging or the like is to insert a diode in the battery's electrical circuit. By eliminating the possibility of charging the cells, internal gas is not generated and the seal never ruptures. Another electrically related mechanism is a belleville shaped "flip switch". This device is triggered by bulging of the closed end of the cell's cylindrical container which causes a washer to invert and thereby break electrical contact.

Another method involves the use of absorbants or electrolyte thickeners. The absorbent materials are usually located outside the seal area and beneath the cell's cover or jacket. As electrolyte escapes from a ruptured seal, the liquid is absorbed. Spew thickeners are mixed with the electrolyte and therefore are contained within the cell. The objective of the thickener is to slow down and/or absorb any leakage that may occur. The disadvantage of using either an absorbant or a thickener is that both materials occupy space that otherwise may be used for active materials of the cell.

A third procedure is to use an outer container and end covers as an electrolyte containment system to provide space to contain any electrolyte that might escape.

U.S. Patent No. 3,676,221 discloses a battery comprising a plurality of stacked, disc-like sealed cells secured together by cups fitted over one cell and having bottoms spot-welded to the interfitting cell. A heat-shrunk sheath encloses the battery and has caps forming the poles. Between each pair of cells is a circular disc of insulating material against which the cup bottoms bulge upon expansion of the contents of the cells, thereby breaking the welds and elecrically disconnecting the cells.

U.S. Patent No. 4,025,696 describes a disc-shaped washer which inverts after the bottom bulge exceeds a predetermined value. Prior to activation, the washer's inside diameter is slanted toward the container. As the container bulges, the bottom of the container pushes against the washer and eventually causes the washer to invert. This inversion electrically separates the bottom cover from the container. An open circuit is the net result.

U.S. Patent No. 3,775,661 describes a cell in which internal pressure forces a diaphragm against a switch which electrically disconnects a charging device. The diaphragm is located inside a venting device which is attached to one end of the cell.

U.S. Patent No. 2,651,669 describes a bulge-activated switch that can be incorporated into a single cell battery or a multiple cell battery and operable such that the bulge causes the opening of a switch, or switches, controlling the cell's discharging and/or charging circuits.

U.S. Patent No. 3,617,386 describes a cell in which a thin sheet of metal with "spring back" ability is positioned between the seal and over of the cell so as to break the cell's electrical circuit when the bulge becomes excessive.

U.S. Patent No. 3,081,366 describes a sealed cell having a metallic sheet member connected to one cell electrode, its periphery being insulatingly affixed to the open casing end, and an overlying exposed metallic terminal insulatingly held over the sheet member. A movable switch portion normally connects an intermediate pressure-deflectable sheet member portion to the external terminal and, in response to outward motion of the deflected sheet portion under excess internal pressure, the switch portion disconnects the external terminal from the deflected sheet portion.

U.S. Patent No. 3,373,057 describes a cell in which the cover of the casing of the cell is provided centrally with an inwardly concave contact button. A dished (which is to say concaveconvex) snap-acting spring disc of the automatic reset type, is marginally sealed to the inside of the cover. An automatic reset disc, after snapping in one direction in response to pressure on its convex side, will return with snap action when the pressure is relieved. The disc is provided centrally with a sealed movable contact for engagement and disengagement with an internal fixed contact when the disc snaps to and fro. The arrangement is such that when the contacts are engaged the disc is slightly sprung toward the cover but short of causing snap action. This maintains good electrical contact pressure under safe internal gas pressures. The fixed contact is electrically connected with one set of battery plates and the other set of plates is electrically connected with the casing.

U.S. Patent No. 4,690,879 describes a cylindrical galvanic cell employing a unitary type cover welded to the container as a failsafe circuit interruption means for electrically isolating one terminal of the cell from the cell's electrochemical system when the bottom of the cylindrical cell bulges beyond a predetermined amount so that the unitary cover breaks electrical contact with the housing of the cell.

U.S. Patent No. 4,756,983 describes a cylindrical galvanic cell employing a cover having a peripheral flange electrically contacting the conductive container of the cell and whereby a predetermined bulge in the bottom of the container will cause the central portion of the cover to separate from the peripheral flange portion thereby electrically isolating the central portion of the cover from the cell.

In a first aspect, the present invention provides a sealed galvanic cell having a circuit interrupter adapted to be activated on bulging of the closed end of the container through internal pressure build-up, characterised in that the closed end of the container is weakened by at least one disturbance therein, thereby to permit a greater degree of bulging than in a similar cell under similar conditions.

The cells of the invention provide considerably more accurate means for electrically isolating one terminal of the cell in response to a given internal pressure in the cell's housing. The weakening of the cell's closed end means that the response to internal pressure build-up is altogether greater, more predictable and more uniform than was previously possible, thereby making possible the provision of cells which reliably disconnect prior to rupture. The margin of error is made that much smaller, and the invention is universally applicable to cells employing bulging in response to internal pressure build-up as a means of control.

It is particularly advantageous that the invention requires no additional space in the cell, is easy to make, cost effective and easy to assemble.

The cells of the invention are preferably provided with a second cover located over the closed end of the container and insulatingly affixed thereto but in peripheral electrical contact therewith, the second cover being adapted to be forced away from the container on bulging of the closed end of the container, thereby breaking the electrical contact. It is particularly advantageous for the second cover to be rigid, or rigidified in some way.

The term 'peripheral' is used to mean generally outer, or towards the periphery, as opposed to towards the centre. This is essentially because, the nearer the centre the cover electrically contacts the container, the greater the degree of bulge necessary to break contact.

In one embodiment, the present invention provides a sealed galvanic cell comprising a conductive container having an upstanding wall open at one end and closed at the opposite end and including in the container a positive electrode, a negative electrode and an electrolyte, the conductive container being in electrical contact with one of the electrodes; a first cover mounted over, secured to and electrically insulated from the open end of the conductive container and in electrical contact with the other electrode; a second cover secured over the closed end of the container and the centre portion of the second cover electrically insulated from the centre portion of the closed end of the container with the peripheral portion of the second cover in electrical contact with the container thereby adapting the second cover as the terminal for the electrode in electrical contact with the container; the surface of the closed end of the container weakened by disturbances therein so that the surface will bulge to a greater degree than an unweakened surface of a closed end of an identical container that has no disturbance when subjected to an internal pressure build-up within the container; and wherein the closed end of the container will bulge upon a predetermined pressure build-up within the container to force the second cover to break the electrical contact with the container, thereby breaking the electrical contact between the second cover and the electrode in electrical contact with the container.

The surface of the closed end of the conductive container may be weakened against an axial force by imparting disturbances onto the surface, for example by mechanical means such as punching, stamping or forming, or by chemical means such as etching or by any other means apparent to those skilled in the art. The essential requirement is that the surface of the closed end of the container be weakened so that the surface will bulge (i.e., deflect) more than a surface that has not been weakened. Preferably, the disturbances are substantially symmetrically disposed about the centre area of the surface of the closed end of the container so that, upon build-up of internal pressure within the container, the centre area of the surface of the closed end of the container can respond to such internal pressure by bulging outward substantially evenly.

A second cover secured to the closed end of the container will then be forced outward by the bulge in the closed end of the container to a point where electrical contact between the container and the second cover can be broken, effectively electrically isolating the second cover terminal of the cell from the cell's electrochemical system.

The modification or weakening of the closed end of the container may be accomplished, for example, by providing arcuate grooves around and extending from the central area of the surface of the closed end of the container, concentric circular grooves around and extending from the central area of the surface of the closed end of the container, dimples around and extending from the central area of the surface of the closed end of the container, or any other disturbances that accomplish the necessary weakening.

In a preferred embodiment, concentric circular grooves are disposed around the central area of the closed end of the container, the width and/or depth of each circular groove preferably increasing the further away the groove is from the centre of the closed end of the container. This allows the centre area of the closed end of the container to more easily deflect or bulge with internal pressure build-up.

The location, shape, number and depth of the disturbances may easily be selected by one skilled in the art to ensure that the surface of the closed end of the container will bulge a predetermined amount in response to a given degree of internal pressure build-up. By appropriate selection of disturbances, the cell may be adapted to bulge to a preselected degree in response to an internal pressure which is preferably below the minimum pressure required to rupture the primary seal between the first cover and the container and yet above the pressure associated with normal operation.

The size of the container and the thickness of the closed end of the container are advantageously taken into consideration when selecting appropriate disturbances. For example, a thicker material for the closed end of container generally requires deeper disturbances in the surface to weaken the surface sufficiently to ensure bulging to an adequate degree.

In a preferred embodiment of the invention, the disturbances comprise arcuate or circular grooves or a combination thereof disposed substantially concentrically about the central area of the surface of the closed end of the container. The closed end of the container is so weakened that the centre area deflects or bulges to a greater degree than the remaining surface of the closed end of the container. The bulge projects outwardly from the container such that the centre area forces or projects outwardly any member it contacts. Thus, by having a rigid cover secured to the closed end of the container with only the peripheral segment making electrical contact with the container, the central area of the closed end of the container can respond to internal pressure build-up and force the rigid cover away from the container to a degree sufficient breach the electrical contact between the cover and the container. The cover may be secured to the closed end of the container by any conventional means disclosed in the art. For example, the peripheral area of the cover may be welded to the container, the welds being broken by bulging of the closed end of the container. The cover may have a dependent flange which may be forceably slid onto the closed end of the container in an interference fit, bulging of the closed end of the container causing the cover to slide off the container, thereby breaking the electrical contact between the cover and the container.

Another embodiment of a cell comprises the use of a rigid second cover terminating with a dependent flange that has internal spaced-apart longitudinal ribs. The ribs provide for an interference fit between the cover and the closed end of the container of the cell. In this embodiment, the cover is secured onto and in electrical contact with the container by an interference fit, and bulging of the closed end forces the second cover to slide off and break electrical contact.

In another embodiment, the external surface of the upstanding wall of the closed end of the container has a surface disturbance, and the rigid second cover terminates with a dependent flange, the internal surface of which has a surface disturbance adapted for mating with the surface disturbance on the upstanding wall so that, when the cover is placed onto the closed end of the container, the disturbance in the flange will snap into engagement with the disturbance of the upstanding wall. Thus, when the closed end of the conductive container bulges due to the pressure build-up, the second cover unsnaps and slides off, breaking electrical contact.

The cover may be secured, most preferably at the centre of the closed end of the container, using an electrically non-conductive adhesive. The cover may alternatively or also be secured to the container using a shrink film extending over the closed end of the container and extending onto the peripheral portion of the cover. It is necessary that the second cover make electrical contact with the container and be disposed such that, when the closed end of the container bulges, it is projected away from the container to break electrical contact.

In a preferred embodiment of the invention, the cover has a depending flange and the upstanding wall of the container adjacent the closed end is indented by an amount equal to or greater than the thickness of the flange of the cover relative to the remainder of the housing. In this embodiment, when the cover is to be secured onto the closed end of the container, the flange is placed onto the indented portion of the container so that it is in alignment with the overall circumferential surface of the container. This produces a cell having a relatively constant outer peripheral wall.

The conductive cover is preferably rigid so that, as the closed end of the container bulges, the conductive cover remains relatively flat, thereby ensuring that it will move away from the container to break electrical contact, the bulge of the closed end of the container being sufficient to move the cover away from the container and to thereby electrically isolate the cover from the conductive container.

The centre area of the second cover may be electrically insulated from the centre area of the closed end of the container using an electrically insulating material. As used herein, the electrically insulating material may be, for example, a disc made of plastic tape, paper or ceramic, or it may be a layer of an electrically non-conductive adhesive. When the insulating material is a disc, the disc may be conductive or non-conductive provided that if it is conductive it is secured to the second cover or closed end of the conductive container using a non-conductive adhesive. In some applications the disc may also be secured to the conductive cover by conventional means.

Any form of electrical insulation of the second cover may be employed, provided that the periphery of the cover is in electrical contact with the container before bulging and that contact is broken on bulging.

Suitable non-conductive adhesives include asphalt, acrylic-type adhesives, epoxy-type adhesives, cyanoacrylate-type adhesives, silicone-type adhesives and hot melts.

The non-conductive adhesive should be applied so that it bonds the conductive cover to the closed end of the container with sufficient strength to prevent tipping of the conductive cover when the cell bulges. In addition, the non-conductive adhesive should allow direct electrical contact to be made between the closed end of the container and the periphery of the cover. If desired, a plastic film or pressure-sensitive adhesive tape or tubing may encase the cell and extend over the edge of the conductive cover. The plastic film, tape or tubing may be heat shrinkable and be made from a material such as polyvinyl chloride, polyvinylidene chloride and polyolefins such as polyethylene and/or polypropylene. Such films may be used to bring the periphery of the cover into contact with container. In such an embodiment, breaking of contact will tend to break or stretch the film, and electrical contact will not, therefore, be reestablished.

In a preferred embodiment, the container is a cylindrical container, the electrically insulating material is an electrically non-conductive adhesive, and the cover is a conductive disc-shaped member with a dependent flange.

The present invention effectively eliminates electrolyte leakage due to abusive charging or overdischarging, does not require an additional electrical component, is relatively simple to incorporate into a manufacturing process, and effectively does not take up any useable space within the cell's interior.

In a preferred embodiment, an electrically non-conductive adhesive is used to secure only a portion of the conductive cover to the container. This adhesive performs two functions. First, the adhesive holds the cover substantially perpendicular to the cell's longitudinal axis and second, the adhesive electrically insulates the cover from the conductive container after the closed end of the container bulges and breaks electrical contact between the flange of the conductive cover and the container.

In some applications the control of the degree of bulge to move the cover from the container may be critical. For commercial applications, the cover should not be electrically insulated from the container when the amount of bulge is that which normally would occur when the cell is subject to high temperature storage. Thus the degree of bulge required for electrical isolation should generally be beyond the normal bulge encountered in high temperature storage and below the degree of bulge that will break the seal and let electrolyte escape. For example, in a standard-type alkaline D-size cylindrical cell (2.277 inches [57.84mm] high and 1.318 inches [33.48mm] diameter), the bottom of the container can bulge as much as 0.025 inch [0.64mm] when stored at 71°C for an eight (8) week period and can vent when the bulge exceeds 0.070 inch [1.78mm]. Consequently, for this size and type cell system, the bottom or closed end of the container is preferably adapted to bulge between about 0.030 [0.76mm] to about 0.070 inch [1.78mm] during electrical charging and the cover adapted to break electrical contact with the container when such a bulge occurs.

The present invention is ideally suited for alkaline cells employing an $MnO_2$ positive electrode, a zinc negative electrode and an electrolyte solution comprising potassium hydroxide.

In one embodiment of the invention, the weakening of the bottom surface of the container may be used to help show or indicate the cell's electrical capacity. It is believed that as the cell's electrical capacity decreases, pressure builds up within the cell. Thus, as internal pressure build-up occurs, the bottom surface of the cell's container deflects or bulges, thereby providing an indication that the cell's electrical capacity has decreased. By appropriate assessment of the degree of bulge in the cell's container, determination of the approximate electrical capacity left in the cell is possible.

The present invention will now be illustrated with reference to preferred embodiments thereof as shown in the accompanying drawings, in which:

Figure 1 is an elevational view partially in cross-section of an alkaline manganese dioxide zinc cell embodying a circuit interrupter of the present invention;

Figure 2 is an elevational view of part of the cell in Figure 1 showing the modified bottom closed end of the container with a slight bulge insufficient to lift the cover away from contact with the container;

Figure 3 is an elevational view of part of the cell in Figure 2 showing the cover lifted off the container;

Figure 4 is a view of another embodiment showing the bottom of a container in which the bottom surface has been weakened in accordance with the invention;

Figure 5 is a side view taken through lines 5-5 of Figure 4;

Figure 6 is a view of another embodiment showing the bottom of a container in which the surface has been weakened in accordance with the invention; and

Figure 7 is a view of another embodiment showing the bottom of a container in which the surface has been weakened in accordance with the invention.

Referring now to Fig's 1-3, alkaline galvanic cell 10 is shown comprising an inverted metallic cupped container 12 provided with an outer plastic shrink film 14. The container 12 has a closed end surface 11 modified or weakened with concentric grooves 13 around the central area of surface 11.

Disposed within the container 12 is an anode 16, a cathode 18, a separator 20 and an alkaline electrolyte which permeates the anode, cathode, and separator, respectively. An anode current pin type collector 24 extends lengthwise within the cell 10, parallel to the longitudinal axis of the cell from a location in contact with the anode 16 to the negative end 26 of the cell 10 where it terminates.

A cup-shaped cover 28 is shown with its peripheral depending flange 30 secured onto the peripheral area of the upstanding wall of container 12 through an interference fit between longitudinal ribs 26 disposed on the inner surface of flange 30. Longitudinal ribs 26 are shown spaced apart and provide an interference fit with the outer surface of container 12. Prior to placing cover 28 onto the container 12, an electrically non-conductive adhesive 32, such as asphalt, is placed between the closed end of container 12 and cover 28 over an area sufficient so that only the inner area of cover 28 will contact the electrically non-conductive adhesive 32, thereby leaving at least ribs 26 disposed on the inner surface of flange 30 of cover 28 in electrical contact with the upstanding wall of container 12. Shrink film or pressure-sensitive adhesive tape 14 can then be shrunk over the cell and onto the peripheral area of cover 28.

Figure 2 shows the beginning of the bulge in surface 11 of cell 10 but insufficient to lift and slide away cover 28 away from container 12. After a predetermined amount of bulge occurs the cover 28 slides away from electrical contact with container 12 as shown in Figure 3. As is evident from figure 3, cover 28 is still secured to container 12 via electrically non-conductive adhesive 32, but its electrical contact is broken, thereby electrically isolating cover 28 from the container 12.

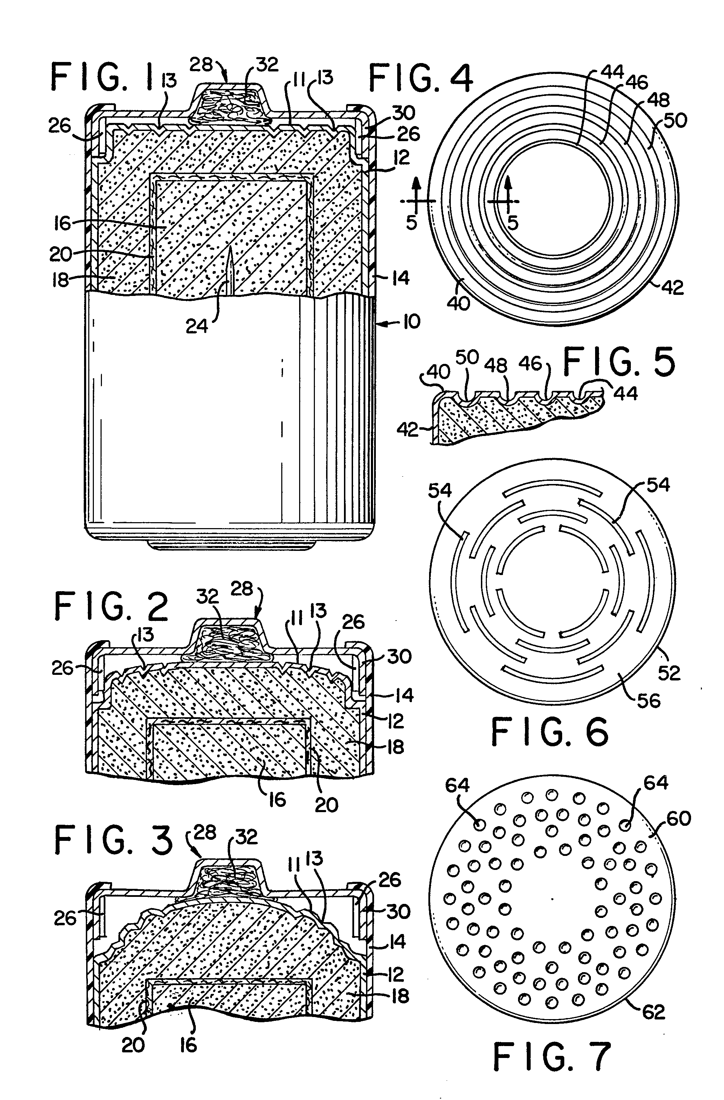

Figures 4 and 5 show another embodiment of the invention in which a surface 40 of container 42 has been modified or weakened with concentric arcuate grooves 44, 46, 48 and 50 about the central area of surface 40. As shown in Figures 4 and 5, groove 50 is wider and deeper than groove 48 and in turn groove 48 is wider and deeper that groove 46 which is wider and deeper than groove 44.

Figure 6 shows another embodiment of the invention in which a surface 56 of container 52 has been modified by imparting a plurality of arcuate grooves 54 about the central area of the surface 50 of container 52.

Figure 7 shows another embodiment of the invention in which a surface 60 of container 62 has been modified by imparting a plurality of dimples 64 in surface 60.

## Claims

1. A sealed galvanic cell having a circuit interrupter adapted to be activated on bulging of the closed end of the container through internal pressure build-up, characterised in that the closed end of the, preferably cylindrical, container is weakened by at least one disturbance therein, thereby to permit a greater degree of bulging than in a similar cell under similar conditions.

2. A cell according to claim 1 wherein the at least one disturbance comprises a concentric grooves or grooves, an arcuate groove or grooves disposed about the centre area of the surface, a plurality of dimples disposed about the centre area of the surface or any suitable combination thereof.

3. A cell according to claim 1 or 2 wherein the at least one disturbance comprises concentric arcuate grooves disposed about the centre area of the surface of the closed end of the container.

4. A cell according to claim 3 wherein concentric grooves further from the centre are larger than grooves closer to the centre.

5. A cell according to any preceding claim comprising a cover located over the closed end of the container and insulatingly affixed thereto but in peripheral electrical contact therewith, the cover being adapted to be forced away from the container on bulging of the closed end of the container, thereby breaking the electrical contact.

6. A cell according to claim 5 wherein the cover is rigid or rigidified.

7. A cell according to claim 5 or 6 wherein the cover has a dependent peripheral flange preferably having internal spaced apart longitudinal ribs to provide a friction fit on the closed end of the container.

8. A cell according to any of claims 5 to 7 wherein an electrically insulating material is provided to insulate substantially the centre portion of the cover from substantially the centre portion of the closed end of the container.

9. A cell according to claim 8 wherein the electrically insulating material is an electrically non-conductive adhesive, preferably selected from asphalt, acrylic adhesive, epoxy adhesive, cyanoacrylate adhesive and silicone adhesive and/or any suitable combination thereof.

10. A cell according to any preceding claim wherein the container is in electrical contact with the cell's positive electrode.

11. A cell according to any preceding claim wherein the container is in electrical contact with the cell's negative electrode.

13. A cell according to any preceding claim wherein one of the electrodes is $MnO_2$, the other is zinc and the electrolyte solution comprises potassium hydroxide.

14. A sealed galvanic cell comprising a conductive container having an upstanding wall open at one end and closed at the opposite end and including in the container a positive electrode, a negative electrode and an electrolyte, the conductive container being in electrical contact with one of the electrodes; a cover mounted over, secured to and electrically insulated from the open end of the conductive container and in electrical contact with the other electrode; the surface of the closed end of the container weakened by disturbances in the surface so that the surface will bulge to a greater degree than a surface of a closed end of an identical container that has no disturbances when the surfaces are subjected to an internal pressure build-up within the cell; and wherein the degree of the bulge is indicative of the degree of pressure build-up in the cell.

15. A cell as described in claim 14 according to any of claims 1 to 4.

16. A sealed galvanic cell comprising a conductive container having an upstanding wall open at one end and closed at the opposite end and including in the container a positive electrode, a negative electrode and an electrolyte, the conductive container being in electrical contact with one of the electrodes: a first cover mounted over, secured to and electrically insulated from the open end of the conductive container and in electrical contact with the other electrode; a second cover secured over the closed end of the container and the centre portion of the second cover electrically insulated from the centre portion of closed end of the container with the peripheral portion of the second cover in electrical contact with the container thereby adapting the second cover as the terminal for the electrode in electrical contact with the container; the surface of the closed end of the container weakened by disturbances in the surface so that the surface will bulge to a greater degree than a surface of a closed end of an identical container that has no disturbances when the surfaces are subjected to a internal pressure build-up within the container; and wherein the closed end of the container will bulge upon a predetermined pressure build-up within the container to force the second cover to break the electrical contact with the container thereby breaking the electrical contact between the second cover and the electrode in electrical contact with the container, said cell optionally comprising any or all of the parameters of any of claims 1 to 13.

FIG. 1

FIG. 2

FIG. 3

FIG. 4

FIG. 5

FIG. 6

FIG. 7